# EUROPEAN PATENT APPLICATION

(11) **EP 4 811 597 A1**
(43) Date of publication of application: **23.09.2026**
(21) Application number: 26166136.7
(22) Date of filing: 19.03.2026
(51) Int. Cl.: H02J 4/25, H02J 7/02, H02J 7/50, H02H 3/16

(54) **CHARGING SYSTEM AND CHARGING DEVICE**

(30) Priority: 21.03.2025 CN 202520512149 U
(71) Applicant: HUAWEI TECHNOLOGIES CO., LTD., Shenzhen 518129 (CN)
(72) Inventor: YANG, Jin, Shenzhen, 518129 (CN)
(74) Representative: Gill Jennings & Every LLP

(57) **Abstract**

Embodiments of this application provide a charging system and a charging device. The charging system includes a direct current bus, an AC-DC conversion circuit, a DC-DC conversion circuit, a plurality of power supply circuits, and an inductor group. The AC-DC conversion circuit is configured to: convert a received alternating current into a direct current, and then output the direct current to the DC-DC conversion circuit through the direct current bus. Each power supply circuit includes a direct current power supply and a ground capacitor, the direct current power supply is connected to the direct current bus through the ground capacitor, and the direct current power supply is configured to output a direct current to the DC-DC conversion circuit through the direct current bus. The DC-DC conversion circuit is configured to: perform power conversion on the direct current obtained from the direct current bus, and then output the converted direct current. In addition, the direct current bus is connected to the AC-DC conversion circuit through the inductor group, or the direct current bus is connected to each power supply circuit through the inductor group. In embodiments of this application, running reliability of the charging system can be improved when the direct current bus is connected to the plurality of power supply circuits.

## Description

### TECHNICAL FIELD

This application relates to the field of charging, and more specifically, to a charging system and a charging device.

### BACKGROUND

With rapid popularization of electric vehicles, charging devices used as auxiliary facilities are increasingly widely used. The charging device mostly uses an architecture design in which an alternating current-direct current (alternating current-direct current, AC-DC) conversion circuit is connected to a direct current-direct current (direct current-direct current, DC-DC) conversion circuit through a direct current bus, to connect the charging device to the electric vehicle through the DC-DC conversion circuit.

Currently, to meet charging requirements of more electric vehicles, more charging devices start to connect to an energy storage system through a direct current bus, so that the direct current bus can transmit, to the electric vehicles through DC-DC conversion circuits, electric energy output by the energy storage system. However, during current actual application, the direct current bus is usually connected to a ground capacitor in the energy storage system. As a result, when a quantity of energy storage systems connected to the direct current bus increases, total capacitance of ground capacitors connected to the direct current bus correspondingly increases. Consequently, excessively large total capacitance easily increases a leakage current in a circuit in which the AC-DC conversion circuit and the direct current bus are located, which causes saturation of a filter in the AC-DC conversion circuit and affects running reliability of the charging device.

### SUMMARY

This application provides a charging system and a charging device, to reduce, when a plurality of power supply circuits are connected to a direct current bus, a leakage current in a circuit formed by an AC-DC conversion circuit, the direct current bus, and ground capacitors in the plurality of power supply circuits. Therefore, a problem that a filter in the AC-DC conversion circuit is easily saturated because the plurality of power supply circuits are connected to the direct current bus can be avoided, thereby improving running reliability of the charging system when the direct current bus is connected to the plurality of power supply circuits.

According to a first aspect, a charging system is provided. The charging system includes a direct current bus, an AC-DC conversion circuit, a DC-DC conversion circuit, and a plurality of power supply circuits. The AC-DC conversion circuit is configured to: convert a received alternating current into a direct current, and then output the direct current to the DC-DC conversion circuit through the direct current bus. Each power supply circuit includes a direct current power supply and a ground capacitor, the direct current power supply is connected to the direct current bus through the ground capacitor, and the direct current power supply is configured to output a direct current to the DC-DC conversion circuit through the direct current bus. The DC-DC conversion circuit is configured to: perform power conversion on the direct current obtained from the direct current bus, and then output the converted direct current. In addition, the charging system further includes an inductor group, and the direct current bus is connected to the AC-DC conversion circuit through the inductor group, or the direct current bus is connected to the ground capacitor in each power supply circuit through the inductor group.

Based on the foregoing design, the inductor group may be connected in series to a ground circuit formed by the AC-DC conversion circuit, the direct current bus, and the ground capacitors in the plurality of power supply circuits. In this way, a total resistance in the ground circuit can be increased by increasing an inductive reactance of the inductor group. Because a leakage current generated in the ground circuit is negatively correlated with the total resistance in the ground circuit, the leakage current in the ground circuit can be reduced. Therefore, a problem that a filter in the AC-DC conversion circuit is easily saturated because the plurality of power supply circuits are connected to the direct current bus can be avoided, thereby ensuring running reliability of the charging system when the direct current bus is connected to the plurality of power supply circuits.

In an implementation, there are a plurality of AC-DC conversion circuits, and there is one inductor group. The plurality of AC-DC conversion circuits are connected in parallel to the direct current bus, and the direct current bus is connected to the ground capacitor in each power supply circuit through the inductor group.

Based on the foregoing design, the inductor group may be connected in series between the direct current bus and the plurality of power supply circuits. In this way, by flexibly adjusting inductive reactances of inductors in the inductor group, a leakage current in a ground circuit formed by any AC-DC conversion circuit in the charging system, the direct current bus, and the plurality of power supply circuits can be reduced, thereby avoiding a problem that a filter in the AC-DC conversion circuit in the charging system is easily saturated because the plurality of power supply circuits are connected to the direct current bus.

In an implementation, there are a plurality of AC-DC conversion circuits, and there are a plurality of inductor groups. One AC-DC conversion circuit is connected to the direct current bus through one inductor group.

Based on the foregoing design, one inductor group may be connected in series between each AC-DC conversion circuit in the charging system and the direct current bus. In this way, by flexibly adjusting inductive reactances of inductors in one inductor group connected in series to any AC-DC conversion circuit, a leakage current generated in a ground circuit formed by the AC-DC conversion circuit, the direct current bus, and the plurality of power supply circuits can be reduced, thereby avoiding a problem that a filter in the AC-DC conversion circuit is easily saturated because the plurality of power supply circuits are connected to the direct current bus. In addition, each inductor group may be configured to adjust only a leakage current in a ground circuit in which one AC-DC conversion circuit connected to the inductor group is located. Compared with adjusting, through one inductor group, a leakage current in a ground circuit in which a plurality of AC-DC conversion circuits in the charging system are located, this can reduce a requirement for a through-current capability of inductors in each inductor group, and reduce a volume of a used inductor.

In an implementation, the charging system further includes a leakage current detection circuit and a switch circuit that are connected in series, and the direct current bus is connected to the ground capacitor in each power supply circuit through the leakage current detection circuit and the switch circuit that are connected in series. The leakage current detection circuit is configured to detect ground currents in circuits formed by the direct current bus and ground capacitors in the plurality of power supply circuits. The switch circuit is configured to: when the ground currents detected by the leakage current detection circuit are greater than a preset current, disconnect the circuits between the direct current bus and the ground capacitors in the plurality of power supply circuits.

Based on the foregoing design, the direct current bus can be connected to each power supply circuit in the charging system through a set of the leakage current detection circuit and the switch circuit that are connected in series. In this way, when the leakage current in the ground circuit formed by the AC-DC conversion circuit, the direct current bus, and the ground capacitors in the plurality of power supply circuits is relatively large, the circuits between the direct current bus and the plurality of power supply circuits can be disconnected in a timely manner, thereby implementing ground insulation protection of the direct current bus and improving running security of the charging system.

In an implementation, the charging system further includes a plurality of leakage current detection circuits and a plurality of switch circuits, one leakage current detection circuit is connected in series to one switch circuit, and the direct current bus is connected to a ground capacitor in one power supply circuit through the one leakage current detection circuit and the one switch circuit that are connected in series. The one leakage current detection circuit is configured to detect a ground current in a circuit formed by the direct current bus and the ground capacitor in the one power supply circuit. The one switch circuit is configured to: when the ground current detected by the one leakage current detection circuit is greater than a preset current, disconnect the circuit between the direct current bus and the one power supply circuit.

Based on the foregoing design, each power supply circuit in the charging system may be connected to the direct current bus through a set of a leakage current detection circuit and a switch circuit that are connected in series. In this way, when the leakage current in the ground circuit formed by the AC-DC conversion circuit, the direct current bus, and the ground capacitor in any power supply circuit is relatively large, a circuit between the direct current bus and the power supply circuit can be disconnected in a timely manner, thereby implementing precise fault isolation, to perform ground insulation protection on the direct current bus and improve running security of the charging system.

In an implementation, the preset current is less than or equal to 6 A.

In an implementation, the charging system further includes a ground insulation resistance detection circuit and a switch circuit, the direct current bus is connected to one end of the ground insulation resistance detection circuit through the switch circuit, and the other end of the ground insulation resistance detection circuit is connected to the ground capacitor in each power supply circuit. The ground insulation resistance detection circuit is configured to detect, before startup of the AC-DC conversion circuit and the plurality of power supply circuits, ground insulation resistances of circuits in which the plurality of power supply circuits are located. The switch circuit is configured to connect, before startup of the AC-DC conversion circuit and the plurality of power supply circuits, circuits between the direct current bus and ground capacitors in the plurality of power supply circuits when the ground insulation resistances detected by the ground insulation resistance detection circuit are greater than a preset insulation resistance.

Based on the foregoing design, the direct current bus can be connected to each power supply circuit in the charging system through a set of the switch circuit and the ground insulation resistance detection circuit that are connected in series. In addition, before startup of the AC-DC conversion circuit and the plurality of power supply circuits, the charging system may first disconnect, through the switch circuit, the circuits between the direct current bus and the plurality of power supply circuits, and then connect, through the switch circuit, the circuits between the direct current bus and the plurality of power supply circuits when the ground insulation resistances of the circuits in which the plurality of power supply circuits are located are relatively large. This can avoid a security problem caused by forcibly connecting the plurality of power supply circuits to the direct current bus when the ground insulation resistances of the circuits in which the plurality of power supply circuits are located are abnormal. In this way, ground insulation protection of the direct current bus can be implemented, and running security of the charging system can be improved.

In an implementation, the charging system further includes a plurality of ground insulation resistance detection circuits and a plurality of switch circuits, the direct current bus is connected to one end of one ground insulation resistance detection circuit through one switch circuit, and the other end of the one ground insulation resistance detection circuit is connected to a ground capacitor in one power supply circuit. The one ground insulation resistance detection circuit is configured to detect, before startup of the AC-DC conversion circuit and the one power supply circuit, a ground insulation resistance of a circuit in which the one power supply circuit is located. The one switch circuit is configured to connect, before startup of the AC-DC conversion circuit and the one power supply circuit, a circuit between the direct current bus and the ground capacitor in the one power supply circuit when the ground insulation resistance detected by the one ground insulation resistance detection circuit is greater than a preset insulation resistance.

Based on the foregoing design, each power supply circuit in the charging system may be connected to the direct current bus through a set of a switch circuit and a ground insulation resistance detection circuit that are connected in series. In addition, before startup of the AC-DC conversion circuit and any power supply circuit, the charging system may first disconnect, through a switch circuit connected to the power supply circuit, a circuit between the direct current bus and the power supply circuit, and then connect, through the switch circuit, the circuit between the direct current bus and the power supply circuit when a ground insulation resistance of a circuit in which the power supply circuit is located is relatively large. This can avoid a security problem caused by forcibly connecting the power supply circuit to the direct current bus when the ground insulation resistance of the circuit in which the power supply circuit is located is abnormal. In this way, precise fault isolation can be implemented, to perform ground insulation protection on the direct current bus and improve running security of the charging system.

In an implementation, the preset ground insulation resistance is less than or equal to m×V_{bus}/30 mA, where 0.8≤m≤1.0, and V_{bus} is a rated operational voltage of the direct current bus.

In an implementation, the charging system further includes a fuse group. The direct current bus is connected to the ground capacitor in each power supply circuit through the fuse group.

Based on the foregoing design, when a current flowing through the fuse group is relatively large, the fuse group may disconnect the circuits between the direct current bus and the plurality of power supply circuits in a fuse blowing manner, to prevent circuit fault from spreading, so that running stability of the charging system can be further improved.

According to a second aspect, a charging device is provided. The charging device includes a direct current bus, an alternating current-direct current AC-DC conversion circuit, and a direct current-direct current DC-DC conversion circuit. The AC-DC conversion circuit is configured to: convert a received alternating current into a direct current, and then output the direct current to the DC-DC conversion circuit through the direct current bus. The direct current bus is configured to be connected to a ground capacitor in each power supply circuit in a plurality of power supply circuits, the direct current bus is configured to transmit, to the DC-DC conversion circuit, a direct current output by the ground capacitor in each power supply circuit, and the DC-DC conversion circuit is configured to: perform power conversion on the direct current obtained from the direct current bus, and then output the converted direct current. The charging device further includes an inductor group, and the direct current bus is connected to the AC-DC conversion circuit through the inductor group, or the direct current bus is configured to be connected to the ground capacitor in each power supply circuit through the inductor group.

In an implementation, there are a plurality of AC-DC conversion circuits, and there is one inductor group. The plurality of AC-DC conversion circuits are connected in parallel to the direct current bus, and the direct current bus is configured to be connected to the ground capacitor in each power supply circuit through the inductor group.

In an implementation, there are a plurality of AC-DC conversion circuits, and there are a plurality of inductor groups. One AC-DC conversion circuit is connected to the direct current bus through one inductor group.

In an implementation, the charging device further includes a leakage current detection circuit and a switch circuit that are connected in series, and the direct current bus is configured to be connected to the ground capacitor in each power supply circuit through the leakage current detection circuit and the switch circuit that are connected in series. The leakage current detection circuit is configured to detect ground currents in circuits formed by the direct current bus and ground capacitors in the plurality of power supply circuits. The switch circuit is configured to: when the ground currents detected by the leakage current detection circuit are greater than a preset current, disconnect the circuits between the direct current bus and the ground capacitors in the plurality of power supply circuits.

In an implementation, the charging device further includes a plurality of leakage current detection circuits and a plurality of switch circuits, one leakage current detection circuit is connected in series to one switch circuit, and the direct current bus is configured to be connected to a ground capacitor in one power supply circuit through the one leakage current detection circuit and the one switch circuit that are connected in series. The one leakage current detection circuit is configured to detect a ground current in a circuit formed by the direct current bus and the ground capacitor in the one power supply circuit. The one switch circuit is configured to: when the ground current detected by the one leakage current detection circuit is greater than a preset current, disconnect the circuit between the direct current bus and the ground capacitor in the one power supply circuit.

In an implementation, the preset current is less than or equal to 6 A.

In an implementation, the charging device further includes a ground insulation resistance detection circuit and a switch circuit, the direct current bus is connected to one end of the ground insulation resistance detection circuit through the switch circuit, and the other end of the ground insulation resistance detection circuit is connected to the ground capacitor in each power supply circuit. The ground insulation resistance detection circuit is configured to detect, before startup of the AC-DC conversion circuit and the plurality of power supply circuits, ground insulation resistances of circuits in which the plurality of power supply circuits are located. The switch circuit is configured to connect, before startup of the AC-DC conversion circuit and the plurality of power supply circuits, circuits between the direct current bus and ground capacitors in the plurality of power supply circuits when the ground insulation resistances detected by the ground insulation resistance detection circuit are greater than a preset insulation resistance.

In an implementation, the charging device further includes a plurality of ground insulation resistance detection circuits and a plurality of switch circuits, the direct current bus is connected to one end of one ground insulation resistance detection circuit through one switch circuit, and the other end of the one ground insulation resistance detection circuit is connected to a ground capacitor in one power supply circuit. The one ground insulation resistance detection circuit is configured to detect, before startup of the AC-DC conversion circuit and the one power supply circuit, a ground insulation resistance of a circuit in which the one power supply circuit is located. The one switch circuit is configured to connect, before startup of the AC-DC conversion circuit and the one power supply circuit, a circuit between the direct current bus and the ground capacitor in the one power supply circuit when the ground insulation resistance detected by the one ground insulation resistance detection circuit is greater than a preset insulation resistance.

In an implementation, the preset ground insulation resistance is less than or equal to m×V_{bus}/30 mA, where 0.8≤m≤1.0, and V_{bus} is a rated operational voltage of the direct current bus.

In an implementation, the charging device further includes a fuse group. The direct current bus is connected to the ground capacitor in each power supply circuit through the fuse group.

For a beneficial effect that is not described in detail in the second aspect, refer to the beneficial effect in the first aspect. Details are not described herein again.

### BRIEF DESCRIPTION OF DRAWINGS

FIG. 1 is a diagram of a scenario in which a charging device charges an electric vehicle according to an embodiment of this application;
FIG. 2 is a diagram of a circuit structure of the charging device shown in FIG. 1 according to an embodiment of this application;
FIG. 3 is a diagram of a structure of a charging system according to an embodiment of this application;
FIG. 4 and FIG. 5 each are a diagram of a specific structure of the charging system shown in FIG. 3 according to an embodiment of this application; and
FIG. 6 to FIG. 9 each are a diagram of a specific structure of the charging system shown in FIG. 4 according to an embodiment of this application.

### DESCRIPTION OF EMBODIMENTS

For ease of understanding of embodiments of this application, the following descriptions are first provided before embodiments of this application are described.

In the descriptions of embodiments of this application, a connection may be an electrical connection. The electrical connection may be understood as that signal transmission is implemented between two electrical elements through a direct electrical connection or an indirect electrical connection. For example, that A is electrically connected to B may be understood as that A is directly electrically connected to B, or may be understood as that A is indirectly electrically connected to B via one or more other electrical elements.

The terms "first" and "second" in embodiments of this application are merely intended for a purpose of description, and shall not be understood as an indication or implication of relative importance or implicit indication of a quantity of indicated technical features. Therefore, a feature limited by "first " or "second" may explicitly indicate or implicitly include one or more such features. In addition, in the descriptions of embodiments of this application, "a plurality of" means two or more, and "at least one" and "one or more" mean one, two, or more.

In the descriptions of embodiments of this application, unless otherwise specified, "and/or" describes only an association relationship between associated objects and indicates that three relationships may exist. For example, A and/or B may indicate the following three cases: Only A exists, both A and B exist, and only B exists.

The following describes technical solutions of this application with reference to accompanying drawings.

First, for ease of understanding the technical solutions provided in embodiments of this application, an application scenario to which embodiments of this application are applicable is first described.

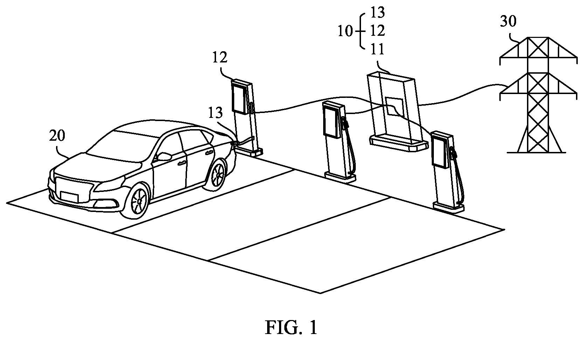

FIG. 1 is a diagram of a scenario in which a charging device 10 charges an electric vehicle 20 according to an embodiment of this application.

Refer to FIG. 1. The charging device 10 is configured to: receive an alternating current output by a power grid 30, convert the alternating current into a stable direct current, and then transmit the direct current to the electric vehicle 20, to charge the electric vehicle 20. Alternatively, the electric vehicle 20 may reversely output electric energy to the power grid 30 through the charging device 10.

For example, as shown in FIG. 1, the charging device 10 is a split-type charging device. Specifically, the charging device 10 includes a power unit 11, a plurality of charging terminals 12, and a plurality of charging connectors 13. The power unit 11 includes a plurality of power conversion circuits. The plurality of power conversion circuits are configured to: convert the alternating current output by the power grid 30 into the stable direct current, and then output the stable direct current to each charging terminal 12. Each charging terminal 12 is configured to be fastened to at least one charging connector 13. Each charging connector 13 is configured to transmit, to the electric vehicle 20, direct currents that are output by the plurality of power conversion circuits to the charging terminal 12, to charge the electric vehicle 20. During specific implementation, one electric vehicle 20 may be connected to one or more charging connectors 13.

It should be understood that, in this embodiment of this application, the charging terminal 12 further includes a cabinet, a human-machine interaction interface, a charging control unit, a metering and billing unit, and the like, to perform information exchange, energy transmission, metering and billing, and the like with the electric vehicle 20.

It should be further understood that, in this embodiment of this application, the electric vehicle 20 is a transportation means driven by electric energy. The electric vehicle 20 is a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

The following further describes the plurality of power conversion circuits disposed in the power unit 11 mentioned above.

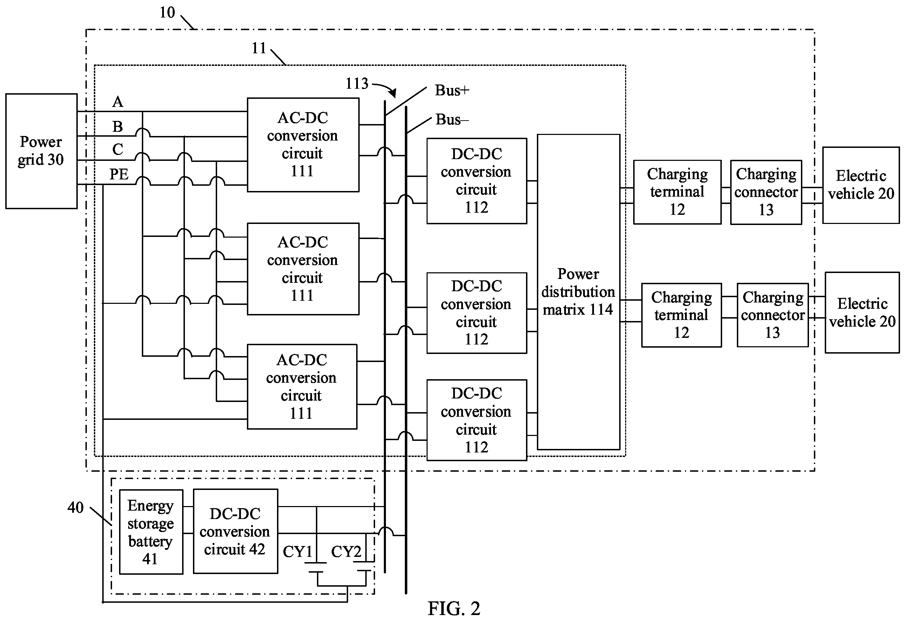

FIG. 2 is a diagram of a circuit structure of the charging device 10 shown in FIG. 1 according to an embodiment of this application.

In some embodiments, with reference to FIG. 2, the plurality of power conversion circuits in the power unit 11 may include a plurality of AC-DC conversion circuits 111 and a plurality of DC-DC conversion circuits 112, and the power unit 11 further includes a direct current bus 113 and a power distribution matrix 114. A phase-A input end, a phase-B input end, and a phase-C input end of each AC-DC conversion circuit 111 are configured to be connected to the power grid 30, and an output end of each AC-DC conversion circuit 111 is connected to an input end of each DC-DC conversion circuit 112 through a positive direct current bus Bus+ and a negative direct current bus Bus- in the direct current bus 113. An output end of each DC-DC conversion circuit 112 is connected to the charging connector 13 in each charging terminal 12 through the power distribution matrix 114.

During specific implementation, each AC-DC conversion circuit 111 is configured to: convert the alternating current output by the power grid 30 into the direct current and output the direct current to the direct current bus 113. Each DC-DC conversion circuit 112 is configured to: further convert the direct current obtained from the direct current bus 113 into a direct current applicable to the electric vehicle 20, and then output the converted direct current to the power distribution matrix 114. The power distribution matrix 114 is configured to connect a circuit between an output end of any DC-DC conversion circuit 112 and a charging connector 13 in any charging terminal 12, to implement dynamic power allocation between the plurality of DC-DC conversion circuits 112 and the plurality of charging connectors 13 in the charging device 10, so that power output by the charging connector 13 to the electric vehicle 20 can meet a charging requirement of the electric vehicle 20.

As described in the foregoing background, as a charging requirement of the electric vehicle 20 increases, more charging devices 10 start to use a direct current stacking architecture, that is, an energy storage system 40 is connected to the direct current bus 113, to transmit, to the DC-DC conversion circuit 112 through the direct current bus 113, a direct current output by the energy storage system 40. In this way, the DC-DC conversion circuit 112 can flexibly schedule the power grid 30 and energy storage power, to meet a charging power requirement of the electric vehicle 20, and implement an effect of peak clipping and valley filling.

Currently, the energy storage system 40 usually includes an energy storage battery 41 and a DC-DC conversion circuit 42. The DC-DC conversion circuit 42 is configured to: perform power conversion on a direct current output by the energy storage battery 41, and then output the converted direct current to the DC-DC conversion circuit 112 through the direct current bus 113. In addition, to filter out high-frequency common-mode interference, the DC-DC conversion circuit 42 is usually connected to the direct current bus 113 through a ground capacitor disposed in the energy storage system 40. For example, as shown in FIG. 2, the energy storage system 40 further includes a ground capacitor CY1 and a ground capacitor CY2. A positive output end and a negative output end of the DC-DC conversion circuit 42 are correspondingly connected to the positive direct current bus Bus+ and the negative direct current bus Bus- respectively through one end of the ground capacitor CY1 and one end of the ground capacitor CY2. The other end of the ground capacitor CY1 and the other end of the ground capacitor CY2 are connected to a protective earthing (protective earthing, PE) conductor.

However, when the AC-DC conversion circuit 111 is a non-isolated AC-DC conversion circuit, to be specific, when electrical isolation is not performed between an input and an output of the AC-DC conversion circuit 111, an increase in a quantity of energy storage systems 40 connected to the direct current bus 113 indicates an increase in total capacitance of ground capacitors connected to the direct current bus 113. For example, the increase in the quantity of the connected energy storage systems 40 indicates an increase in a quantity of ground capacitors CY1 connected to the positive direct current bus Bus+, so that total capacitance of ground capacitors connected to the positive direct current bus Bus+ increases, and correspondingly, a total capacitance resistance of the ground capacitors connected to the positive direct current bus Bus+ decreases. As a result, a total resistance in a ground loop formed by the AC-DC conversion circuit 111, the positive direct current bus Bus+, the ground capacitor CY1 in the energy storage system 40, and the protective earthing PE conductor decreases, and correspondingly, a ground current in the ground loop increases, to be specific, a leakage current in a circuit in which the AC-DC conversion circuit 111 and the positive direct current bus Bus+ are located increases. Consequently, the increased leakage current easily causes saturation of a filter in the AC-DC conversion circuit 111, which affects normal running of the charging device 10.

Based on the foregoing content, an embodiment of this application provides a charging system. The charging system includes a direct current bus, an AC-DC conversion circuit, a DC-DC conversion circuit, and a plurality of power supply circuits. The AC-DC conversion circuit is configured to: convert a received alternating current into a direct current, and then output the direct current to the DC-DC conversion circuit through the direct current bus. Each power supply circuit includes a direct current power supply and a ground capacitor, the direct current power supply is connected to the direct current bus through the ground capacitor, and the direct current power supply is configured to output a direct current to the DC-DC conversion circuit through the direct current bus. The DC-DC conversion circuit is configured to: perform power conversion on the direct current obtained from the direct current bus, and then output the converted direct current. In addition, the charging system further includes an inductor group, and the direct current bus is connected to the AC-DC conversion circuit through the inductor group, or the direct current bus is connected to the ground capacitor in each power supply circuit through the inductor group.

Based on the foregoing design, the inductor group may be connected in series to a ground circuit formed by the AC-DC conversion circuit, the direct current bus, and the ground capacitors in the plurality of power supply circuits. In this way, a total resistance in the ground circuit can be increased by increasing an inductive reactance of the inductor group. Because a leakage current generated in the ground circuit is negatively correlated with the total resistance in the ground circuit, the leakage current in the ground circuit can be reduced. Therefore, a problem that a filter in the AC-DC conversion circuit is easily saturated because the plurality of power supply circuits are connected to the direct current bus can be avoided, thereby ensuring running reliability of the charging system when the direct current bus is connected to the plurality of power supply circuits.

The following describes in detail a charging system provided in embodiments of this application with reference to the accompanying drawings.

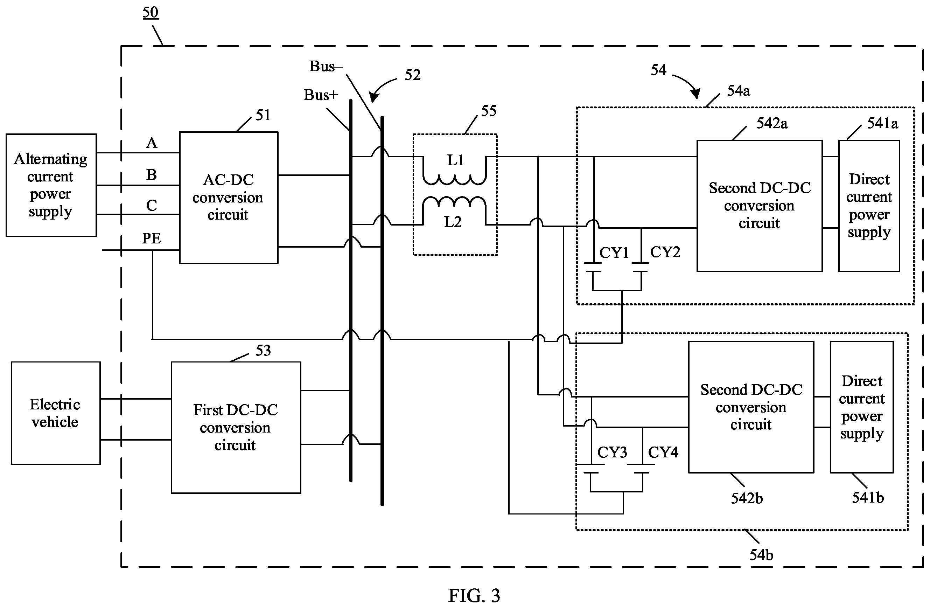

FIG. 3 is a diagram of a structure of a charging system 50 according to an embodiment of this application.

In some embodiments, with reference to FIG. 3, the charging system 50 includes an AC-DC conversion circuit 51, a direct current bus 52, and a first DC-DC conversion circuit 53. A phase-A input end, a phase-B input end, and a phase-C input end of the AC-DC conversion circuit 51 are configured to be connected to an alternating current power supply. The alternating current power supply may be, for example, a power grid. An output end of the AC-DC conversion circuit 51 is connected to an input end of the first DC-DC conversion circuit 53 through a positive direct current bus Bus+ and a negative direct current bus Bus- in the direct current bus 52. An output end of the first DC-DC conversion circuit 53 is configured to be connected to an electric vehicle.

It should be understood that, in this embodiment of this application, there may be a plurality of AC-DC conversion circuits 51 and a plurality of first DC-DC conversion circuits 53. The plurality of AC-DC conversion circuits 51 are connected in parallel to the direct current bus 52, and the plurality of first DC-DC conversion circuits 53 are also connected in parallel to the direct current bus 52. For specific descriptions of the AC-DC conversion circuit 51, the direct current bus 52, and the first DC-DC conversion circuit 53, refer to the related descriptions of the AC-DC conversion circuit 111, the DC-DC conversion circuit 112, and the direct current bus 113 shown in FIG. 2. Details are not described herein again.

In some embodiments, with reference to FIG. 3, the charging system 50 further includes a plurality of power supply circuits 54, and the plurality of power supply circuits 54 are connected in parallel to the direct current bus 52. Specifically, each power supply circuit 54 includes a direct current power supply and a ground capacitor, the direct current power supply is connected to the direct current bus 52 through the ground capacitor, and the direct current power supply is configured to output a direct current to the first DC-DC conversion circuit 53 through the direct current bus 52, so that the first DC-DC conversion circuit 53 may transmit, to the electric vehicle, the direct current output by the direct current power supply.

It should be understood that, in this embodiment of this application, the power supply circuit 54 may be an energy storage system, and correspondingly, the direct current power supply is an energy storage battery. Alternatively, the power supply circuit 54 may be a photovoltaic system, and correspondingly, the direct current power supply is a photovoltaic module. When the power supply circuit 54 is the energy storage system, the direct current power supply in the energy storage system 54 may further obtain, through the direct current bus 52, a direct current output by the AC-DC conversion circuit 51, to perform charging.

For example, as shown in FIG. 3, the charging system 50 includes a power supply circuit 54a and a power supply circuit 54b. The power supply circuit 54a includes a direct current power supply 541a, a second DC-DC conversion circuit 542a, a ground capacitor CY1, and a ground capacitor CY2. An input end of the second DC-DC conversion circuit 542a is connected to the direct current power supply 541a, a positive output end of the second DC-DC conversion circuit 542a is connected to the positive direct current bus Bus+ in the direct current bus 52 through one end of the ground capacitor CY1, a negative output end of the second DC-DC conversion circuit 542a is connected to the negative direct current bus Bus- in the direct current bus 52 through one end of the ground capacitor CY2, and the other end of the ground capacitor CY1 and the other end of the ground capacitor CY2 are connected to a protective earthing PE conductor. The second DC-DC conversion circuit 542a is configured to: perform voltage conversion on a direct current output by the direct current power supply 541a, and then output the converted direct current to the first DC-DC conversion circuit 53 through the direct current bus 52.

It should be understood that, in this embodiment of this application, when the power supply circuit 54a is the energy storage system, the second DC-DC conversion circuit 542a may be further configured to: obtain, through the direct current bus 52, the direct current output by the AC-DC conversion circuit 51, perform voltage conversion on the direct current, and then output the converted direct current to the direct current power supply 541a, to charge the direct current power supply 541a.

Similarly, the power supply circuit 54b includes a direct current power supply 541b, a second DC-DC conversion circuit 542b, a ground capacitor CY3, and a ground capacitor CY4. A positive output end and a negative output end of the second DC-DC conversion circuit 542b are connected to the positive direct current bus Bus+ and the negative direct current bus Bus- in the direct current bus 52 respectively through one end of the ground capacitor CY3 and one end of the ground capacitor CY4, and the other end of the ground capacitor CY3 and the other end of the ground capacitor CY4 are connected to the protective earthing PE conductor. For specific descriptions of the power supply circuit 54b, refer to the related descriptions of the power supply circuit 54a. Details are not described herein again.

Based on the foregoing design, in addition to scheduling power output by the alternating current power supply, the first DC-DC conversion circuit 53 may further schedule energy storage power and/or photovoltaic power in the plurality of power supply circuits 54 connected to the direct current bus 52, to charge the electric vehicle, so that utility power, light energy, and the energy storage power are flexibly scheduled, to meet a charging requirement of the electric vehicle.

In some embodiments, with reference to FIG. 3, the charging system 50 further includes an inductor group 55. The direct current bus 52 is connected to the AC-DC conversion circuit 51 through the inductor group 55, or the direct current bus 52 is connected to the ground capacitor in each power supply circuit 54 in the charging system 50 through the inductor group 55.

For example, as shown in FIG. 3, the direct current bus 52 is connected to a ground capacitor in the power supply circuit 54a and a ground capacitor in the power supply circuit 54b through the inductor group 55. The inductor group 55 includes an inductor L1 and an inductor L2. The positive direct current bus Bus+ in the direct current bus 52 is connected to the ground capacitor CY1 in the power supply circuit 54a and the ground capacitor CY3 in the power supply circuit 54b through the inductor L1, and the negative direct current bus Bus- in the direct current bus 52 is connected to the ground capacitor CY2 in the power supply circuit 54a and the ground capacitor CY4 in the power supply circuit 54b through the inductor L2.

Based on the foregoing design, the inductor L1 is connected in series to a ground circuit formed by the AC-DC conversion circuit 51, the positive direct current bus Bus+, the ground capacitor CY1 in the power supply circuit 54a, and the ground capacitor CY3 in the power supply circuit 54b. In this way, an inductive reactance of the inductor L1 is positively correlated with a total resistance in the ground circuit in which the AC-DC conversion circuit 51 and the positive direct current bus Bus+ are located. In other words, as the inductive reactance of the inductor L1 increases, the total resistance in the ground circuit in which the AC-DC conversion circuit 51 and the positive direct current bus Bus+ are located increases accordingly.

It should be understood that the ground capacitor CY1 and the ground capacitor CY3 are connected in parallel to the ground circuit in which the AC-DC conversion circuit 51 and the positive direct current bus Bus+ are located, and a parallel connection of the two ground capacitors increases total capacitance of the ground capacitors connected to the positive direct current bus Bus+. Correspondingly, a total capacitance resistance of the ground capacitors connected to the positive direct current bus Bus+ decreases, resulting in a decrease in the total resistance in the ground circuit in which the AC-DC conversion circuit 51 and the positive direct current bus Bus+ are located. Because a leakage current generated in the ground circuit is equal to a common mode voltage of an input end of any phase in the AC-DC conversion circuit 51 divided by the total resistance in the ground circuit, the decrease in the total resistance in the ground circuit indicates an increase in the leakage current generated in the ground circuit.

Based on the foregoing analysis, in this embodiment of this application, the inductive reactance of the inductor L1 can be increased, to increase the total resistance in the ground circuit in which the AC-DC conversion circuit 51 and the positive direct current bus Bus+ are located, thereby reducing the leakage current generated in the ground circuit, and alleviating a problem that the leakage current in the ground circuit increases because the ground capacitor CY1 and the ground capacitor CY3 are connected in parallel to the ground circuit. Similarly, in this embodiment of this application, an inductive reactance of the inductor L2 can be further increased, to increase a total resistance of a ground circuit formed by the AC-DC conversion circuit 51, the negative direct current bus Bus-, the ground capacitor CY2 in the power supply circuit 54a, and the ground capacitor CY4 in the power supply circuit 54b, thereby reducing a leakage current generated in the ground circuit.

Therefore, when the plurality of power supply circuits 54 are connected to the direct current bus 52, the leakage current generated in the ground circuit can be reduced by disposing the inductor group 55 in series to the ground circuit formed by the direct current bus 52 and the ground capacitors in the plurality of power supply circuits 54, and flexibly adjusting the inductive reactances of the inductors in the inductor group 55. Therefore, a problem that a filter in the AC-DC conversion circuit 51 is easily saturated because the plurality of power supply circuits 54 are connected to the direct current bus 52 can be avoided, thereby ensuring running reliability of the charging system 50 when the direct current bus 52 is connected to the plurality of power supply circuits 54.

The following further describes a specific disposition manner of the inductor group 55 in the charging system 40.

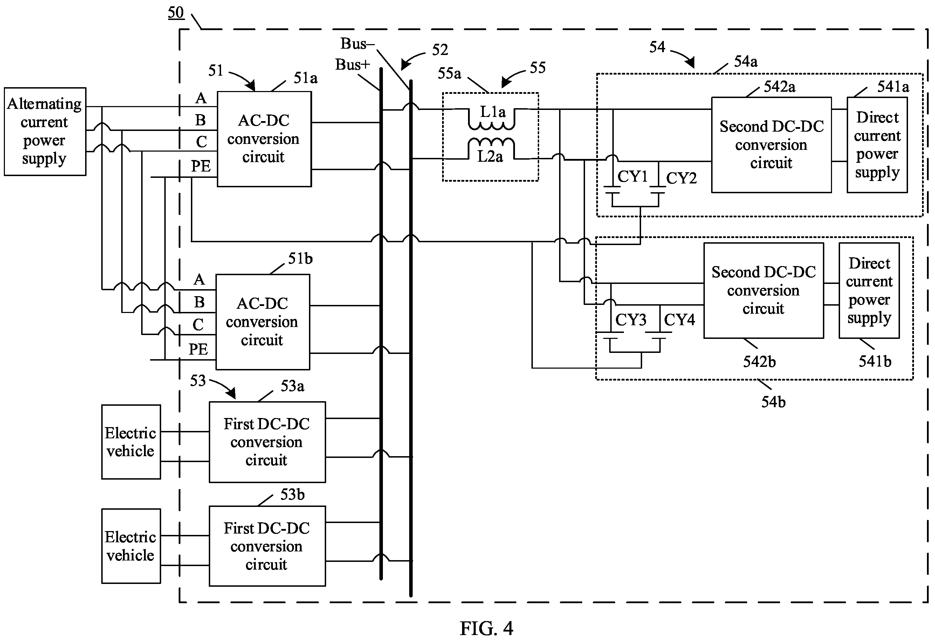

FIG. 4 is a diagram of a specific structure of the charging system 50 shown in FIG. 3 according to an embodiment of this application.

In some embodiments, with reference to FIG. 4, the plurality of AC-DC conversion circuits 51 and the plurality of first DC-DC conversion circuits 53 in the charging system 50 are respectively connected in parallel to the direct current bus 52. In addition, there is one inductor group 55 in the charging system 50, and the direct current bus 52 is connected to the ground capacitor in each power supply circuit 54 in the plurality of power supply circuits 54 through the inductor group 55.

For example, as shown in FIG. 4, the charging system 50 still includes the power supply circuit 54a and the power supply circuit 54b. The charging system 50 further includes an AC-DC conversion circuit 51a, an AC-DC conversion circuit 51b, a first DC-DC conversion circuit 53a, a first DC-DC conversion circuit 53b, and an inductor group 55a. Output ends of the AC-DC conversion circuit 51a and the AC-DC conversion circuit 51b are connected in parallel to the direct current bus 52, and input ends of the first DC-DC conversion circuit 53a and the first DC-DC conversion circuit 53b are connected in parallel to the direct current bus 52. In addition, the positive direct current bus Bus+ and the negative direct current bus Bus- in the direct current bus 52 are further connected to the ground capacitors in the power supply circuit 54a and the power supply circuit 54b respectively through an inductor L1a and an inductor L2a in the inductor group 55a. For specific descriptions, refer to the related descriptions in the embodiment shown in FIG. 3. Details are not described herein again.

Based on the foregoing design, the inductor group 55a may be connected in series between the direct current bus 52 and the plurality of power supply circuits 54. In this way, by flexibly adjusting inductive reactances of the inductors in the inductor group 55a, a leakage current generated in a ground circuit formed by any AC-DC conversion circuit 51 in the charging system 50, the direct current bus 52, and the plurality of power supply circuits 54 can be reduced, thereby avoiding a problem that a filter in the AC-DC conversion circuit 51 in the charging system 50 is easily saturated because the plurality of power supply circuits 54 are connected to the direct current bus 52.

In some embodiments, with reference to FIG. 4, a ground circuit formed by the AC-DC conversion circuit 51a, the positive direct current bus Bus+, the ground capacitor CY1 in the power supply circuit 54a, and the ground capacitor CY3 in the power supply circuit 54b is used as an example. A leakage current Iₗₑₐₖ generated in the ground circuit satisfies the following formula (1) and formula (2): ${I}_{leak} = \frac{{V}_{com}}{{Z}_{line} + {Z}_{L} + 1 / {ωC}_{y}}$ ${I}_{leak} \leq min \left({I}_{sat}, {I}_{max}\right)$

V_{com} represents a largest common mode voltage among the common mode voltage of the A-phase input end, the common mode voltage of the B-phase input end, and the common mode voltage of the C-phase input end of the AC-DC conversion circuit 51a. Z_{linc} represents a total resistance of an electronic component and a transmission wire other than the inductor L1, the ground capacitor CY1, and the ground capacitor CY3 in the ground circuit formed by the AC-DC conversion circuit 51a, the positive direct current bus Bus+, the ground capacitor CY1, and the ground capacitor CY3. Z_{L} represents the inductive reactance of the inductor L1 in the inductor group 55a. C_{y} represents the total capacitance of the ground capacitor CY1 and the ground capacitor CY3, and the total capacitance is equal to a sum of capacitance of the ground capacitor CY1 and capacitance of the ground capacitor CY3. 1/ωC_{y} represents an equivalent capacitive reactance of the ground capacitor CY1 and the ground capacitor CY3. min(Iₛₐₜ, Iₘₐₓ) represents a smaller current between Iₛₐₜ and Iₘₐₓ, Iₛₐₜ represents a common mode current saturation value of a filter in the AC-DC conversion circuit 51a, and Iₘₐₓ represents an upper limit value of a leakage current adjustment capability in the AC-DC conversion circuit 51a.

Based on the foregoing design, a leakage current generated in a ground circuit formed by an input end of any phase in the AC-DC conversion circuit 51a, the positive direct current bus Bus+, the ground capacitor CY1, and the ground capacitor CY3 can meet a requirement for normal running of the AC-DC conversion circuit 51a.

It should be further understood that, in this embodiment of this application, the formulas that the leakage current I_{lcak} meet are applicable to a ground circuit formed by any AC-DC conversion circuit 51 in the charging system 50.

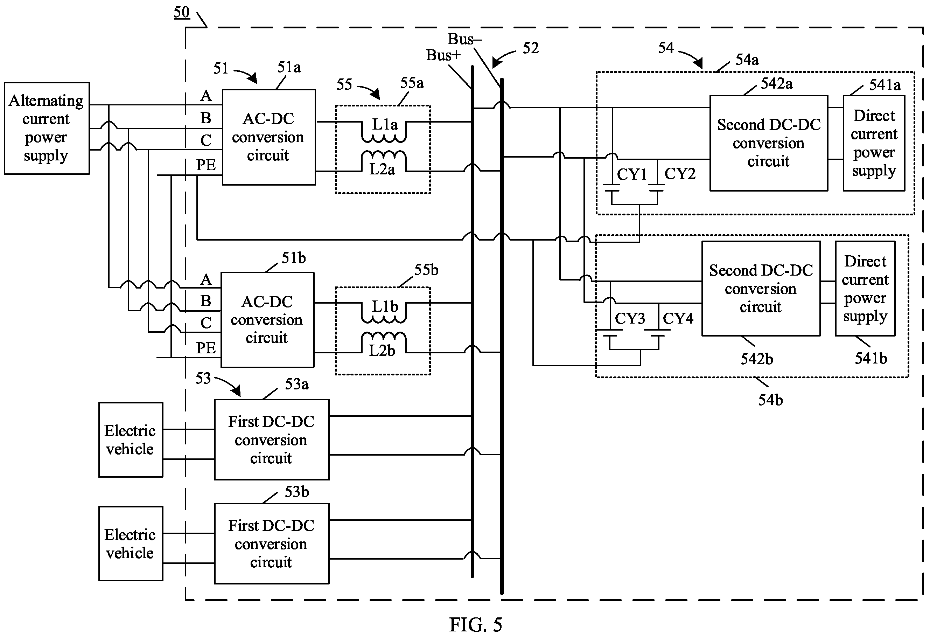

FIG. 5 is a diagram of another specific structure of the charging system 50 shown in FIG. 3 according to an embodiment of this application.

Same as the embodiment shown in FIG. 4, in the embodiment shown in FIG. 5, the plurality of AC-DC conversion circuits 51 and the plurality of first DC-DC conversion circuits 53 in the charging system 50 are respectively connected in parallel to the direct current bus 52.

Different from the embodiment shown in FIG. 4, in the embodiment shown in FIG. 5, there are a plurality of inductor groups 55 in the charging system 50. One AC-DC conversion circuit 51 is connected to the direct current bus 52 through one inductor group 55. In other words, in the charging system 50, the plurality of AC-DC conversion circuits 51 are in a one-to-one correspondence with the plurality of inductor groups 55, and each AC-DC conversion circuit 51 is connected to the direct current bus 52 through a corresponding inductor group 55.

For example, as shown in FIG. 5, the charging system 50 includes an AC-DC conversion circuit 51a and an AC-DC conversion circuit 51b. The charging system 50 further includes an inductor group 55a and an inductor group 55b. A positive output end and a negative output end of the AC-DC conversion circuit 51a are correspondingly connected to the positive direct current bus Bus+ and the negative direct current bus Bus- in the direct current bus 52 through an inductor L1a and an inductor L2a in the inductor group 55a. A positive output end and a negative output end of the AC-DC conversion circuit 51b are correspondingly connected to the positive direct current bus Bus+ and the negative direct current bus Bus- in the direct current bus 52 through an inductor L1b and an inductor L2b in the inductor group 55b.

Based on the foregoing design, one inductor group 55 may be connected in series between each AC-DC conversion circuit 51 in the charging system 50 and the direct current bus 52. In this way, by flexibly adjusting inductive reactances of inductors in one inductor group 55 connected in series to any AC-DC conversion circuit 51, a leakage current generated in a ground circuit in which the AC-DC conversion circuit 51 is located can be reduced, thereby avoiding a problem that a filter in the AC-DC conversion circuit 51 is easily saturated because the plurality of power supply circuits 54 are connected to the direct current bus 52. In addition, each inductor group 55 may be configured to adjust only a leakage current in a ground circuit in which one AC-DC conversion circuit 51 connected to the inductor group 55 is located. Compared with adjusting, through one inductor group 55, a leakage current in a ground circuit in which a plurality of AC-DC conversion circuits in the charging system 50 are located, this can reduce a requirement for a through-current capability of inductors in each inductor group 55, and reduce a volume of a used inductor.

It should be understood that, during specific implementation, for related descriptions of a magnitude of a leakage current generated in a ground circuit in which any AC-DC conversion circuit 51 in the charging system 50 is located and a magnitude of inductive reactances of inductors in an inductor group 55 corresponding to the AC-DC conversion circuit 51, refer to the related descriptions of the leakage current Iₗₑₐₖ in the embodiment shown in FIG. 4. Details are not described herein again.

The following describes another structure of the charging system 50 by using an example in which the charging system 50 shown in FIG. 4 includes one inductor group 55, that is, includes the inductor group 55a. It should be understood that the following descriptions of the charging system 50 are also applicable to the charging system 50 shown in FIG. 5 that includes a plurality of inductor groups 55.

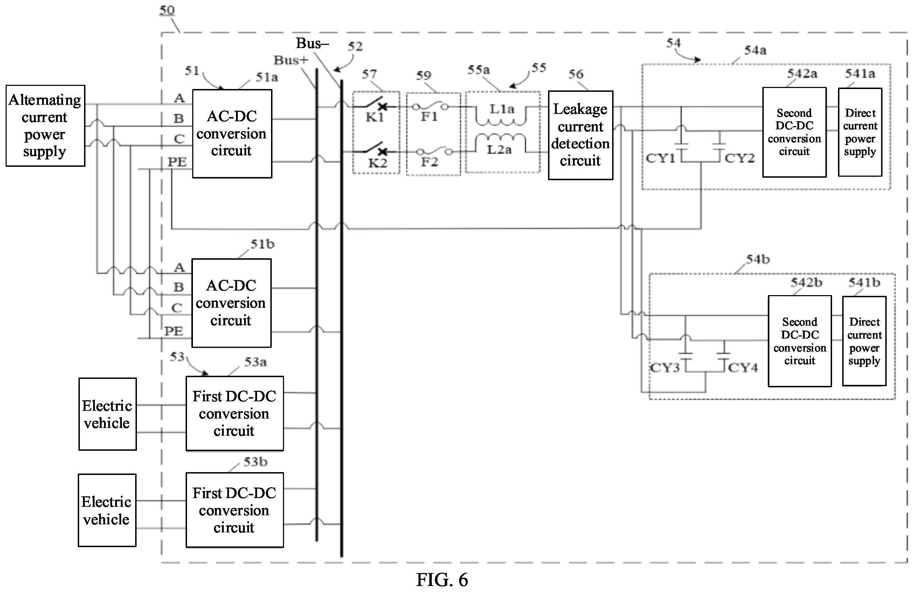

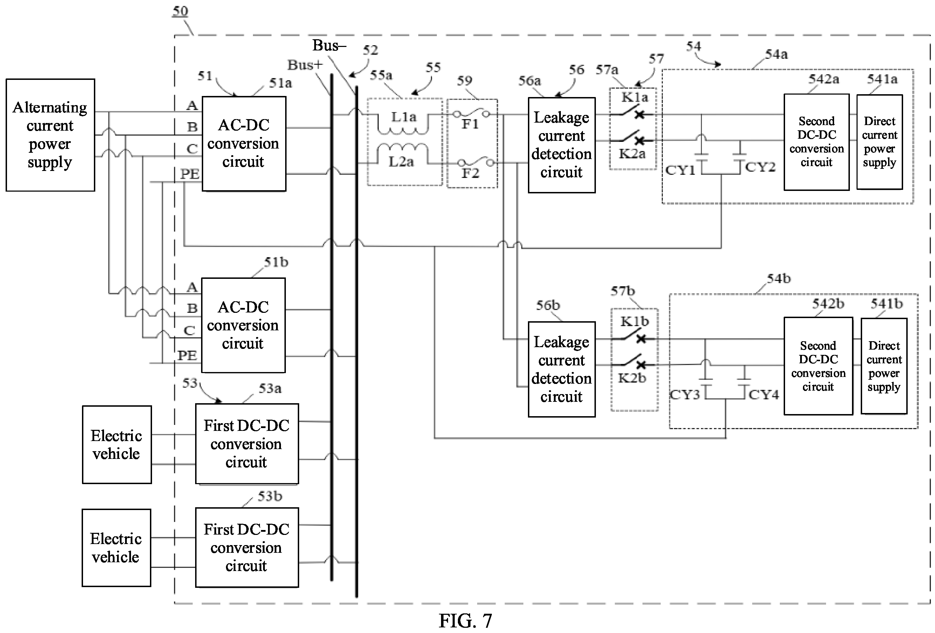

FIG. 6 and FIG. 7 each are a diagram of a specific structure of the charging system 50 shown in FIG. 4 according to an embodiment of this application.

In some embodiments, with reference to FIG. 6, the charging system 50 further includes a leakage current detection circuit 56 and a switch circuit 57 that are connected in series, and the direct current bus 52 is connected to the ground capacitor in each power supply circuit 54 in the plurality of power supply circuits 54 through the leakage current detection circuit 56 and the switch circuit 57 that are connected in series. The leakage current detection circuit 56 is configured to detect ground currents in circuits formed by the direct current bus 52 and the ground capacitors in the plurality of power supply circuits 54. The switch circuit 57 is configured to: when the ground currents detected by the leakage current detection circuit 56 are greater than a preset current, disconnect the circuits between the direct current bus 52 and the plurality of power supply circuits 54.

For example, as shown in FIG. 6, the charging system 50 includes the AC-DC conversion circuit 51a, the AC-DC conversion circuit 51b, the power supply circuit 54a, and the power supply circuit 54b. The AC-DC conversion circuit 51a and the AC-DC conversion circuit 51b are connected in parallel to the direct current bus 52, and the direct current bus 52 is connected to the power supply circuit 54a and the power supply circuit 54b through the leakage current detection circuit 56 and the switch circuit 57 that are connected in series.

For example, the AC-DC conversion circuit 51a, the power supply circuit 54a, and the power supply circuit 54b all operate. The leakage current detection circuit 56 may detect a current flowing into the leakage current detection circuit 56 and a current flowing out of the leakage current detection circuit 56, and use a difference between the two currents as the leakage current in the ground circuit formed by the AC-DC conversion circuit 51a, the direct current bus 52, the ground capacitor in the power supply circuit 54a, and the ground capacitor in the power supply circuit 54b. Further, when the leakage current detected by the leakage current detection circuit 56 is greater than the preset current value, the charging system 50 may determine that an insulation status of the ground circuit in which the direct current bus 52 is located does not meet a safe running condition, so that the switch circuit 57 disconnects the circuits between the direct current bus 52 and the power supply circuit 54a and between the direct current bus 52 and the power supply circuit 54b.

Based on the foregoing design, the direct current bus 52 can be connected to each power supply circuit 54 in the charging system 50 through a set of the leakage current detection circuit 56 and the switch circuit 57 that are connected in series. In this way, when the leakage current in the ground circuit formed by any AC-DC conversion circuit 51 in the charging system 50, the direct current bus 52, and the ground capacitors in the plurality of power supply circuits 54 is relatively large, the circuits between the direct current bus 52 and the plurality of power supply circuits 54 can be disconnected in a timely manner, thereby implementing ground insulation protection of the direct current bus 52 and improving running security of the charging system 50.

In some embodiments, with reference to FIG. 6, the switch circuit 57 includes a switch K1 and a switch K2. The positive direct current bus Bus+ and the negative direct current bus Bus- in the direct current bus 52 may be connected to the ground capacitor in each power supply circuit 54 respectively through the switch K1 and the switch K2. In this way, by turning on or turning off the switch K1 and the switch K2, the circuits between the direct current bus 52 and the plurality of power supply circuits 54 may be connected or disconnected.

In some other embodiments, with reference to FIG. 7, the charging system 50 further includes a plurality of leakage current detection circuits 56 and a plurality of switch circuits 57. One leakage current detection circuit 56 is connected in series to one switch circuit 57, and the direct current bus 52 is connected to one power supply circuit 54 in the charging system 50 through the leakage current detection circuit 56 and the switch circuit 57 that are connected in series. In other words, the plurality of leakage current detection circuits 56 are connected in series to the plurality of switch circuits 57 in a one-to-one correspondence, and each power supply circuit 54 in the charging system 50 is connected to the direct current bus 52 through a set of a leakage current detection circuit 56 and a switch circuit 57 that are correspondingly connected in series.

In addition, any leakage current detection circuit 56 is configured to detect a ground current in a circuit formed by the direct current bus 52 and a ground capacitor in a power supply circuit 54 connected to the direct current bus 52. A switch circuit 57 connected in series to the leakage current detection circuit 56 is configured to: when the ground current detected by the leakage current detection circuit 56 is greater than a preset current, disconnect the circuit between the direct current bus 52 and the power supply circuit 54 connected to the direct current bus 52.

For example, as shown in FIG. 7, the charging system 50 still includes the AC-DC conversion circuit 51a, the AC-DC conversion circuit 51b, the power supply circuit 54a, and the power supply circuit 54b. The charging system 50 further includes a leakage current detection circuit 56a, a leakage current detection circuit 56b, a switch circuit 57a, and a switch circuit 57b. The AC-DC conversion circuit 51a and the AC-DC conversion circuit 51b are connected in parallel to the direct current bus 52. The leakage current detection circuit 56a and the switch circuit 57a are connected in series and then connected between the direct current bus 52 and the power supply circuit 54a, and the leakage current detection circuit 56b and the switch circuit 57b are connected in series and then connected between the direct current bus 52 and the power supply circuit 54b.

The leakage current detection circuit 56a is configured to detect a leakage current generated in a ground circuit formed by any one of the AC-DC conversion circuit 51a and the AC-DC conversion circuit 51b and the ground capacitor in the power supply circuit 54a. The switch circuit 57a is configured to: when the leakage current detected by the leakage current detection circuit 56a is greater than a preset current, disconnect the circuit between the direct current bus 52 and the power supply circuit 54a. Similarly, the leakage current detection circuit 56b is configured to detect a leakage current generated in a ground circuit formed by any one of the AC-DC conversion circuit 51a and the AC-DC conversion circuit 51b and the ground capacitor in the power supply circuit 54b. The switch circuit 57b is configured to: when the leakage current detected by the leakage current detection circuit 56b is greater than a first preset leakage current, disconnect the circuit between the direct current bus 52 and the power supply circuit 54b. For specific descriptions, refer to the related descriptions in the embodiment shown in FIG. 6. Details are not described herein again.

Based on the foregoing design, each power supply circuit 54 in the charging system 50 may be connected to the direct current bus 52 through a set of a leakage current detection circuit 56 and a switch circuit 57 that are connected in series. In this way, when the leakage current in the ground circuit formed by the AC-DC conversion circuit 51, the direct current bus 52, and the ground capacitor in any power supply circuit 54 is relatively large, a circuit between the direct current bus 52 and the power supply circuit 54 can be disconnected in a timely manner, thereby implementing precise fault isolation, to perform ground insulation protection on the direct current bus 52 and improve running security of the charging system 50.

In some embodiments, with reference to FIG. 6 and FIG. 7, the preset current may be less than or equal to 6 A.

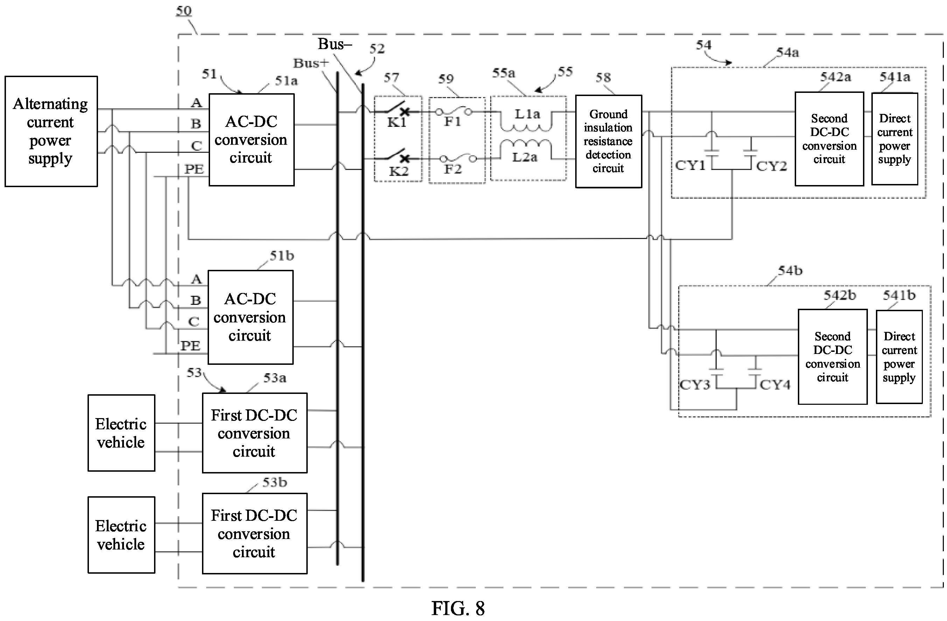

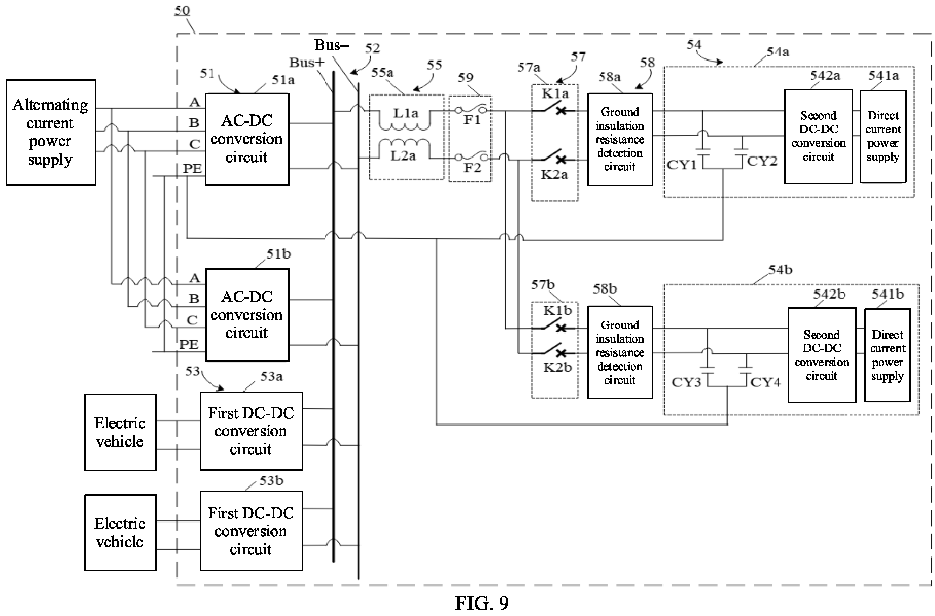

FIG. 8 and FIG. 9 each are a diagram of another specific structure of the charging system 50 shown in FIG. 4 according to an embodiment of this application.

Different from the charging system 50 shown in FIG. 6 and FIG. 7 that includes the leakage current detection circuit 56, in the embodiments shown in FIG. 8 and FIG. 9, the charging system 50 may include a ground insulation resistance detection circuit 58, but does not include the leakage current detection circuit 56.

Specifically, in some embodiments, with reference to FIG. 8, the charging system 50 further includes a switch circuit 57 and the ground insulation resistance detection circuit 58. The direct current bus 52 is connected to one end of the ground insulation resistance detection circuit 58 through the switch circuit 57, and the other end of the ground insulation resistance detection circuit 58 is connected to the ground capacitor in each power supply circuits 54 in the plurality of power supply circuits 54. That is, the direct current bus 52 is connected to the plurality of power supply circuits 54 through a set of the switch circuit 57 and the ground insulation resistance detection circuit 58 that are connected in series.

In addition, the ground insulation resistance detection circuit 58 is configured to detect, before startup of the AC-DC conversion circuit 51 and the plurality of power supply circuits 54, ground insulation resistances of circuits in which the plurality of power supply circuits 54 are located. The switch circuit 57 is configured to connect, before startup of the AC-DC conversion circuit 51 and the plurality of power supply circuits 54, circuits between the direct current bus 52 and the ground capacitors in the plurality of power supply circuits 54 when the ground insulation resistances detected by the ground insulation resistance detection circuit 58 are greater than a preset insulation resistance.

For example, as shown in FIG. 8, the charging system 50 still includes the AC-DC conversion circuit 51a, the AC-DC conversion circuit 51b, the power supply circuit 54a, and the power supply circuit 54b. The AC-DC conversion circuit 51a and the AC-DC conversion circuit 51b are connected in parallel to the direct current bus 52, and the direct current bus 52 is connected to the power supply circuit 54a and the power supply circuit 54b through the switch circuit 57 and the ground insulation resistance detection circuit 58 that are connected in series. For example, the AC-DC conversion circuit 51a, the AC-DC conversion circuit 51b, the power supply circuit 54a, and the power supply circuit 54b all need to start up for operation. Before startup of the AC-DC conversion circuit 51a, the AC-DC conversion circuit 51b, the power supply circuit 54a, and the power supply circuit 54b, the charging system 50 may first enable the switch circuit 57 to disconnect circuits between the direct current bus 52 and the power supply circuit 54a and between the direct current bus 52 and the power supply circuit 54b, and then detect, through the ground insulation resistance detection circuit 58, ground insulation resistances of circuits in which the power supply circuit 54a and the power supply circuit 54b are located.

Further, when the ground insulation resistances detected by the ground insulation resistance detection circuit 58 are less than or equal to the preset insulation resistance, the charging system 50 may still enable the switch circuit 57 to be in a state of disconnecting the circuits between the direct current bus 52 and the power supply circuit 54a and between the direct current bus 52 and the power supply circuit 54b. When the ground insulation resistances detected by the ground insulation resistance detection circuit 58 are greater than the preset insulation resistance, the charging system 50 may enable the switch circuit 57 to connect the circuits between the direct current bus 52 and the power supply circuit 54a and between the direct current bus 52 and the power supply circuit 54b. In addition, after the switch circuit 57 connects the circuits between the direct current bus 52 and the power supply circuit 54a and between the direct current bus 52 and the power supply circuit 54b, the charging system 50 may control the AC-DC conversion circuit 51a, the AC-DC conversion circuit 51b, the power supply circuit 54a, and the power supply circuit 54b to start up and start to transmit electric energy.

Based on the foregoing design, the direct current bus 52 can be connected to each power supply circuit 54 in the charging system 50 through a set of the ground insulation resistance detection circuit 58 and the switch circuit 57 that are connected in series. In addition, before startup of the AC-DC conversion circuit 51 and the plurality of power supply circuits 54, the charging system 50 may first disconnect, through the switch circuit 57, the circuits between the direct current bus 52 and the plurality of power supply circuits 54, and then connect, through the switch circuit 57, the circuits between the direct current bus 52 and the plurality of power supply circuits 54 when the ground insulation resistances of the circuits in which the plurality of power supply circuits 54 are located are relatively large. This can avoid a security problem caused by forcibly connecting the plurality of power supply circuits 54 to the direct current bus 52 when the ground insulation resistances of the circuits in which the plurality of power supply circuits 54 are located are abnormal. In this way, ground insulation protection of the direct current bus 52 can be implemented, and running security of the charging system 50 can be improved.

In some other embodiments, with reference to FIG. 9, the charging system 50 further includes a plurality of switch circuits 57 and a plurality of ground insulation resistance detection circuits 58. The direct current bus 52 is connected to one end of one ground insulation resistance detection circuit 58 through one end of one switch circuit 57, and the other end of the one ground insulation resistance detection circuit 58 is connected to a ground capacitor in one power supply circuit 54. In other words, the plurality of ground insulation resistance detection circuits 58 are connected in series to the plurality of switch circuits 57 in a one-to-one correspondence, and each power supply circuit 54 in the charging system 50 is connected to the direct current bus 52 through a set of a ground insulation resistance detection circuit 58 and a switch circuit 57 that are connected in series.

In addition, any ground insulation resistance detection circuit 58 is configured to detect, before startup of the AC-DC conversion circuit 51 and one power supply circuit 54 connected to the ground insulation resistance detection circuit 58, a ground insulation resistance of a circuit in which the one power supply circuit 54 connected to the any ground insulation resistance detection circuit 58 is located. A switch circuit 57 connected in series to the any ground insulation resistance detection circuit 58 is configured to connect, before startup of the AC-DC conversion circuit 51 and the one power supply circuit 54 connected to the any ground insulation resistance detection circuit 58, a circuit between the one power supply circuit 54 connected to the any ground insulation resistance detection circuit 58 and the direct current bus 52 when the ground insulation resistance detected by the any ground insulation resistance detection circuit 58 is greater than a preset insulation resistance.

For example, as shown in FIG. 9, the charging system 50 still includes the AC-DC conversion circuit 51a, the AC-DC conversion circuit 51b, the power supply circuit 54a, and the power supply circuit 54b. The charging system 50 further includes a ground insulation resistance detection circuit 58a, a ground insulation resistance detection circuit 58b, a switch circuit 57a, and a switch circuit 57b. The AC-DC conversion circuit 51a and the AC-DC conversion circuit 51b are connected in parallel to the direct current bus 52. The switch circuit 57a and the ground insulation resistance detection circuit 58a are connected in series and then connected between the direct current bus 52 and the power supply circuit 54a, and the switch circuit 57b and the ground insulation resistance detection circuit 58b are connected in series and then connected between the direct current bus 52 and the power supply circuit 54b.

For example, the AC-DC conversion circuit 51a, the AC-DC conversion circuit 51b, and the power supply circuit 54a all need to start up for operation. Before startup of the AC-DC conversion circuit 51a, the AC-DC conversion circuit 51b, and the power supply circuit 54a, the charging system may first enable the switch circuit 57a to disconnect a circuit between the direct current bus 52 and the power supply circuit 54a, and then detect, through the ground insulation resistance detection circuit 58a, a ground insulation resistance of a circuit in which the power supply circuit 54a is located.

Further, when the ground insulation resistance detected by the ground insulation resistance detection circuit 58a is less than or equal to the preset insulation resistance, the charging system 50 may still enable the switch circuit 57a to be in a state of disconnecting the circuit between the direct current bus 52 and the power supply circuit 54a. When the ground insulation resistance detected by the ground insulation resistance detection circuit 58a is greater than the preset insulation resistance, the charging system 50 may first enable the switch circuit 57a to connect the circuit between the direct current bus 52 and the power supply circuit 54a, and then control the AC-DC conversion circuit 51a, the AC-DC conversion circuit 51b, and the power supply circuit 54a to start up and start to transmit electric energy. For specific descriptions, refer to the related descriptions in the embodiment shown in FIG. 8. Details are not described herein again.

Based on the foregoing design, each power supply circuit 54 in the charging system 50 may be connected to the direct current bus 52 through a set of a switch circuit 57 and a ground insulation resistance detection circuit 58 that are connected in series. In addition, before startup of the AC-DC conversion circuit 51 and any power supply circuit 54, the charging system 50 may first disconnect, through a switch circuit 57 connected to the power supply circuit 54, a circuit between the direct current bus 52 and the power supply circuit 54, and then connect the circuit between the direct current bus 52 and the power supply circuit 54 when a ground insulation resistance of a circuit in which the power supply circuit 54 is located is relatively large. This can avoid a security problem caused by forcibly connecting the power supply circuit 54 to the direct current bus 52 when the ground insulation resistance of the circuit in which the power supply circuit 54 is located is abnormal. In this way, precise fault isolation can be implemented, to perform ground insulation protection on the direct current bus 52 and improve running security of the charging system 50.

In some embodiments, with reference to FIG. 8 and FIG. 9, the preset insulation resistance may be less than or equal to m×V_{bus}/30 mA, where 0.8≤m≤1.0, and V_{bus} is a rated operational voltage of the direct current bus. For example, m may be 0.8, 0.84, 0.86, 0.9, 0.94, 0.96, or 1.0. For example, V_{bus} may be 820 V, 1000 V, or 1500 V.

In some embodiments, with reference to FIG. 6 to FIG. 9, the charging system 50 further includes a fuse group 59. The direct current bus 52 is connected to the ground capacitor in each power supply circuit 54 in the plurality of power supply circuits 54 through the fuse group 59. The fuse group 59 is configured to disconnect the circuits between the direct current bus 52 and the plurality of power supply circuits 54 when Joule heat generated by a current flowing through the fuse group 59 is greater than a preset threshold. Joule heat generated by a fuse of the fuse group 59 is equal to I²T, where I is the current flowing through the fuse, and T is a time when the current flows through.

It should be understood that, in this embodiment of this application, the current flowing through the fuse group 59 may be a current output from the direct current bus 52 to the plurality of power supply circuits 54, or may be a current output from the plurality of power supply circuits 54 to the direct current bus 52.

Specifically, as shown in FIG. 6 to FIG. 9, the charging system 50 still includes the power supply circuit 54a and the power supply circuit 54b, and the fuse group 59 includes a fuse F1 and a fuse F2. The positive direct current bus Bus+ and the negative direct current bus Bus- in the direct current bus 52 are connected to the ground capacitors in the power supply circuit 54a and the power supply circuit 54b respectively through the fuse F1 and the fuse F2.

For example, the power supply circuit 54a and the power supply circuit 54b both operate. When the Joule heat generated by the current flowing through the fuse F1 and the fuse F2 is greater than the preset threshold because the AC-DC conversion circuit 51 is faulty or the power supply circuit 54a and the power supply circuit 54b are faulty, the fuse F1 and the fuse F2 may disconnect the circuits between the direct current bus 52 and the power supply circuit 54a and between the direct current bus 52 and the power supply circuit 54b in a fuse blowing manner, to prevent circuit fault from spreading, so that running stability of the charging system 50 can be further improved.

In some embodiments, the preset threshold is less than or equal to pre-arc joules set for the fuse F1 and the fuse F2.

The foregoing describes the charging system 50 provided in this embodiment of this application. It should be understood that all structures in the charging system 50 other than the plurality of power supply circuits 54 may be disposed in a charging device provided in embodiments of this application. The following describes the charging device provided in embodiments of this application.

An embodiment of this application further provides a charging device. The charging device includes a direct current bus, an AC-DC conversion circuit, and a DC-DC conversion circuit. The AC-DC conversion circuit is configured to: convert a received alternating current into a direct current, and then output the direct current to the DC-DC conversion circuit through the direct current bus. The direct current bus is configured to be connected to a ground capacitor in each power supply circuit in a plurality of power supply circuits, and the direct current bus is configured to transmit, to the DC-DC conversion circuit, a direct current output by the ground capacitor in each power supply circuit. The DC-DC conversion circuit is configured to: perform power conversion on the direct current obtained from the direct current bus, and then output the converted direct current. In addition, the charging device further includes an inductor group, and the direct current bus is connected to the AC-DC conversion circuit through the inductor group, or the direct current bus is configured to be connected to the ground capacitor in each power supply circuit through the inductor group.

It should be understood that, for specific descriptions of the direct current bus, the AC-DC conversion circuit, the DC-DC conversion circuit, and the inductor group in the charging device, refer to the related descriptions of the direct current bus 52, the AC-DC conversion circuit 51, the first DC-DC conversion circuit 53, and the inductor group 55 in the charging system 50. Details are not described herein again.

Based on the foregoing design, when the direct current bus is connected to the plurality of power supply circuits, the inductor group may be connected in series to a ground circuit formed by the AC-DC conversion circuit, the direct current bus, and the ground capacitors in the plurality of power supply circuits. In this way, a total resistance in the ground circuit can be increased by increasing an inductive reactance of the inductor group. Because a leakage current generated in the ground circuit is negatively correlated with the total resistance in the ground circuit, the leakage current in the ground circuit can be reduced. Therefore, a problem that a filter in the AC-DC conversion circuit is easily saturated because the plurality of power supply circuits are connected to the direct current bus can be avoided, thereby ensuring running reliability of the charging device when the direct current bus is connected to the plurality of power supply circuits.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging system, wherein the charging system comprises a direct current bus, an alternating current-direct current, AC-DC conversion circuit, a direct current-direct current DC-DC conversion circuit, and a plurality of power supply circuits, the AC-DC conversion circuit is configured to: convert a received alternating current into a direct current, and then output the direct current to the DC-DC conversion circuit through the direct current bus, each power supply circuit comprises a direct current power supply and a ground capacitor, the direct current power supply is connected to the direct current bus through the ground capacitor, the direct current power supply is configured to output a direct current to the DC-DC conversion circuit through the direct current bus, and the DC-DC conversion circuit is configured to: perform power conversion on the direct current obtained from the direct current bus, and then output the converted direct current; and
the charging system further comprises an inductor group, and the direct current bus is connected to the AC-DC conversion circuit through the inductor group, or the direct current bus is connected to the ground capacitor in each power supply circuit through the inductor group.

2. The charging system according to claim 1, wherein there are a plurality of AC-DC conversion circuits, and there is one inductor group; and
the plurality of AC-DC conversion circuits are connected in parallel to the direct current bus, and the direct current bus is connected to the ground capacitor in each power supply circuit through the inductor group.

3. The charging system according to claim 1, wherein there are a plurality of AC-DC conversion circuits, and there are a plurality of inductor groups; and
one AC-DC conversion circuit is connected to the direct current bus through one inductor group.

4. The charging system according to any one of claims 1 to 3, wherein the charging system further comprises a leakage current detection circuit and a switch circuit that are connected in series, and the direct current bus is connected to the ground capacitor in each power supply circuit through the leakage current detection circuit and the switch circuit that are connected in series;
the leakage current detection circuit is configured to detect ground currents in circuits formed by the direct current bus and the ground capacitors in the plurality of power supply circuits; and
the switch circuit is configured to: when the ground currents detected by the leakage current detection circuit are greater than a preset current, disconnect the circuits between the direct current bus and the ground capacitors in the plurality of power supply circuits.

5. The charging system according to any one of claims 1 to 3, wherein the charging system further comprises a plurality of leakage current detection circuits and a plurality of switch circuits, one leakage current detection circuit is connected in series to one switch circuit, and the direct current bus is connected to the ground capacitor in one power supply circuit through the one leakage current detection circuit and the one switch circuit that are connected in series;
the one leakage current detection circuit is configured to detect a ground current in a circuit formed by the direct current bus and the ground capacitor in the one power supply circuit; and
the one switch circuit is configured to: when the ground current detected by the one leakage current detection circuit is greater than a preset current, disconnect the circuit between the direct current bus and the ground capacitor in the one power supply circuit.

6. The charging system according to any one of claims 1 to 3, wherein the charging system further comprises a ground insulation resistance detection circuit and a switch circuit, the direct current bus is connected to one end of the ground insulation resistance detection circuit through the switch circuit, and the other end of the ground insulation resistance detection circuit is connected to the ground capacitor in each power supply circuit;
the ground insulation resistance detection circuit is configured to detect, before startup of the AC-DC conversion circuit and the plurality of power supply circuits, ground insulation resistances of circuits in which the plurality of power supply circuits are located; and
the switch circuit is configured to connect, before startup of the AC-DC conversion circuit and the plurality of power supply circuits, circuits between the direct current bus and the ground capacitors in the plurality of power supply circuits when the ground insulation resistances detected by the ground insulation resistance detection circuit are greater than a preset insulation resistance.

7. The charging system according to any one of claims 1 to 3, wherein the charging system further comprises a plurality of ground insulation resistance detection circuits and a plurality of switch circuits, the direct current bus is connected to one end of one ground insulation resistance detection circuit through one switch circuit, and the other end of the one ground insulation resistance detection circuit is connected to the ground capacitor in one power supply circuit;
the one ground insulation resistance detection circuit is configured to detect, before startup of the AC-DC conversion circuit and the one power supply circuit, a ground insulation resistance of a circuit in which the one power supply circuit is located; and
the one switch circuit is configured to connect, before startup of the AC-DC conversion circuit and the one power supply circuit, a circuit between the direct current bus and the ground capacitor in the one power supply circuit when the ground insulation resistance detected by the one ground insulation resistance detection circuit is greater than a preset insulation resistance.

8. A charging device, wherein the charging device comprises a direct current bus, an alternating current-direct current AC-DC conversion circuit, and a direct current-direct current DC-DC conversion circuit, the AC-DC conversion circuit is configured to: convert a received alternating current into a direct current, and then output the direct current to the DC-DC conversion circuit through the direct current bus, the direct current bus is configured to be connected to a ground capacitor in each power supply circuit in a plurality of power supply circuits, the direct current bus is configured to transmit, to the DC-DC conversion circuit, a direct current output by the ground capacitor in each power supply circuit, and the DC-DC conversion circuit is configured to: perform power conversion on the direct current obtained from the direct current bus, and then output the converted direct current; and
the charging device further comprises an inductor group, and the direct current bus is connected to the AC-DC conversion circuit through the inductor group, or the direct current bus is configured to be connected to the ground capacitor in each power supply circuit through the inductor group.

9. The charging device according to claim 8, wherein there are a plurality of AC-DC conversion circuits, and there is one inductor group; and
the plurality of AC-DC conversion circuits are connected in parallel to the direct current bus, and the direct current bus is configured to be connected to the ground capacitor in each power supply circuit through the inductor group.

10. The charging device according to claim 8, wherein there are a plurality of AC-DC conversion circuits, and there are a plurality of inductor groups; and
one AC-DC conversion circuit is connected to the direct current bus through one inductor group.

11. The charging device according to any one of claims 8 to 10, wherein the charging device further comprises a leakage current detection circuit and a switch circuit that are connected in series, and the direct current bus is configured to be connected to the ground capacitor in each power supply circuit through the leakage current detection circuit and the switch circuit that are connected in series;
the leakage current detection circuit is configured to detect ground currents in circuits formed by the direct current bus and the ground capacitors in the plurality of power supply circuits; and
the switch circuit is configured to: when the ground currents detected by the leakage current detection circuit are greater than a preset current, disconnect the circuits between the direct current bus and the ground capacitors in the plurality of power supply circuits.

12. The charging device according to any one of claims 8 to 10, wherein the charging device further comprises a plurality of leakage current detection circuits and a plurality of switch circuits, one leakage current detection circuit is connected in series to one switch circuit, and the direct current bus is configured to be connected to the ground capacitor in one power supply circuit through the one leakage current detection circuit and the one switch circuit that are connected in series;
the one leakage current detection circuit is configured to detect a ground current in a circuit formed by the direct current bus and the ground capacitor in the one power supply circuit; and
the one switch circuit is configured to: when the ground current detected by the one leakage current detection circuit is greater than a preset current, disconnect the circuit between the direct current bus and the ground capacitor in the one power supply circuit.

13. The charging device according to any one of claims 8 to 10, wherein the charging device further comprises a ground insulation resistance detection circuit and a switch circuit, the direct current bus is connected to one end of the ground insulation resistance detection circuit through the switch circuit, and the other end of the ground insulation resistance detection circuit is connected to the ground capacitor in each power supply circuit;
the ground insulation resistance detection circuit is configured to detect, before startup of the AC-DC conversion circuit and the plurality of power supply circuits, ground insulation resistances of circuits in which the plurality of power supply circuits are located; and
the switch circuit is configured to connect, before startup of the AC-DC conversion circuit and the plurality of power supply circuits, circuits between the direct current bus and the ground capacitors in the plurality of power supply circuits when the ground insulation resistances detected by the ground insulation resistance detection circuit are greater than a preset insulation resistance.

14. The charging device according to any one of claims 8 to 10, wherein the charging device further comprises a plurality of ground insulation resistance detection circuits and a plurality of switch circuits, the direct current bus is connected to one end of one ground insulation resistance detection circuit through one switch circuit, and the other end of the one ground insulation resistance detection circuit is connected to a ground capacitor in one power supply circuit;
the one ground insulation resistance detection circuit is configured to detect, before startup of the AC-DC conversion circuit and the one power supply circuit, a ground insulation resistance of a circuit in which the one power supply circuit is located; and
the one switch circuit is configured to connect, before startup of the AC-DC conversion circuit and the one power supply circuit, a circuit between the direct current bus and the ground capacitor in the one power supply circuit when the ground insulation resistance detected by the ground insulation resistance detection circuit is greater than a preset insulation resistance.
